# EUROPÄISCHE PATENTSCHRIFT

(11) **EP 0 679 470 B1**
(45) Veröffentlichungstag und Bekanntmachung des Hinweises auf die Patenterteilung: **06.05.1999**
(21) Anmeldenummer: 95103016.2
(22) Anmeldetag: 03.03.1995
(51) Int. Cl.: B23K 37/04, B23K 26/00, B23K 26/08

(54) **Verfahren zum Herstellen geschweisster Stahlblechplatinen**
Method for manufacturing welded steel sheets
Procédé de fabrication de tôles d'acier soudées

(30) Priorität: 26.04.1994 DE 4414464
(43) Veröffentlichungstag der Anmeldung: 02.11.1995
(73) Patentinhaber: Thyssen Krupp Stahl AG, 40211 Düsseldorf (DE)
(72) Erfinder: Tenhaven, Ulrich, Dr.-Ing., D-44229 Dortmund (DE)
(74) Vertreter: Cohausz & Florack

(56) Entgegenhaltungen:
- EP-A- 0 494 345
- FR-A- 2 715 092
- US-A- 4 545 018
- US-A- 4 691 093
- PATENT ABSTRACTS OF JAPAN vol. 007 no. 128 (M-220) ,3.Juni 1983 & JP-A-58 047590 (TOKYO SHIBAURA DENKI KK) 19.März 1983,
- PATENT ABSTRACTS OF JAPAN vol. 015 no. 208 (M-1117) ,28.Mai 1991 & JP-A-03 057582 (NEC CORP) 12.März 1991,

## Beschreibung

Die Erfindung betrifft ein Verfahren zum Herstellen geschweißter Stahlblechplatinen nach dem Oberbegriff des Anspruchs 1.

Derartige Stahlblechplatinen werden z.B. in der Automobilindustrie für die Herstellung von Preß- und/oder Abkantteilen, die als Karosserieteile dienen, verwendet, da diese Teile in ihrem Verlauf unterschiedlichen Belastungen ausgesetzt sind. In der DE 42 35 110 C1 ist eine vorteilhafte Verfahrensweise zur Herstellung geschweißter Stahlblechplatinen beschrieben.

Danach kann die Herstellung der Blechtafeln so erfolgen, daß von einem Stahlblechcoil der erforderlichen Breite Band abgezogen, durch eine Rollenrichtmaschine geführt, durch eine Querteilschere die gewünschten Blechtafeln abgeschnitten und die Tafeln in Transportbehältern abgestapelt werden.

In einer weiteren Bearbeitungsstufe werden die zu verschweißenden Blechkanten so beschnitten, daß die Abweichungen von der Geradheit der Blechkante beseitigt werden.

Die so vorbereiteten Blechtafeln werden einer Schweißmaschine zugeführt und an den langen Kanten miteinander verschweißt. Hierbei kann das Verschweißen sowohl als Stumpfnahtschweißen durch einen energiereichen Strahl wie z.B. einen Laserstrahl oder einen Elektronenstrahl ausgeführt werden oder auch als Überlapptschweißen mit einer Quetschnaht-Schweißvorrichtung.

Weitere Verfahren zur Herstellung von geschweißten Stahlblechplatinen sind dadurch gekennzeichnet, daß zunächst Formzuschnitte aus geeigneten Stahlbändern ausgestanzt werden und die Formzuschnitte durch Laserschweißen oder Quetschnahtschweißen miteinander zu fertigen Schweißplatinen miteinander verbunden werden, wie "Thyssen Technische Berichte", Heft 1/1992, "DVS-Veröffentlichung Nr. 143" und Tagungsband der "International Deep Drawing Group" 1990 zeigen. Beim Schweißen kann der Laserstrahl oder die Quetschnahtschweißvorrichtung über die positionierten Blechkanten bewegt werden oder die positionierten Blechzuschnitte werden mit einer geeigneten Vorrichtung durch das Schweißaggregat geführt.

Alle Verfahren haben als gemeinsames Merkmal, daß die vorbereiteten Blechtafeln oder Formzuschnitte beim Verschweißen fest eingespannt sein müssen.

Dies ist erforderlich, damit die Blechkanten während des gesamten Schweißvorganges die erforderliche Position zueinander behalten. Dabei müssen die Spannvorrichtungen so ausgelegt sein, daß die durch die in den verschweißten Abschnitten der Naht eingebrachte Wärme verursachten quer zur Schweißnaht wirkenden Kräfte aufgefangen werden, da diese die positionierten Blechkanten auseinander drükken wollen.

Die Spannvorrichtungen sind demnach je nach Nahtlänge und Schweißverfahren mit aufwendigen hydraulischen, mechanischen oder pneumatischen Vorrichtungen ausgestattet, die für eine ausschließliche Positionierung der Blechkanten ohne Schweißkräfte auffangen zu müssen nicht erforderlich wären.

Aus der DE 28 10 822 C2 ist es zwar bekannt, Karosserieteile beim Fertigen einer Rohkarosserie vor dem Verschweißen geometrisch festzulegen, an bestimmten Punkten in einer festen geometrischen Ausbildung zu verschweißen und anschließend fertigzuschweißen.

Es ist auch allgemein üblich und bekannt, z. B. bei der Herstellung von Stahlkonstruktionen oder bei Reparaturschweißungen von Karosserieelementen die zu verbindenden Teile zunächst durch Heftpunkte zu fixieren, um ein Ausweichen durch thermisch bedingten Verzug zu verhindern und anschließend die Fertigschweißung zwischen den Heftpunkten vorzunehmen.

Diese Heftpunkte werden mit Hilfe von Lichtbogenschweißvorrichtungen mit abschmelzenden oder nicht abschmelzenden Elektroden oder mit Widerstandspunktschweißaggregaten angebracht. Jedoch werden auch beim Heftschweißen mit den vorstehend genannten Verfahren verhältnismäßig große, thermischen Verzug auslösende Volumina des Materials erwärmt, so daß auch beim Heften je nach Geometrie und Materialsteifigkeit der Konstruktion fixierende Spannvorrichtungen angewendet werden müssen.

Bei der Herstellung geschweißter Stahlblechplatinen aus Blechtafeln oder Formzuschnitten sind die bekannten Schweißverfahren zur Herstellung von fixierenden Heftpunkten gänzlich ungeeignet, weil die hierbei eingebrachte Wärmemenge schon bei einem einzigen Heftpunkt so groß ist, daß ein thermischer Verzug und damit ein Ausweichen der Blechkanten aus der gewünschten Position unvermeidlich ist.

Von daher liegt der Erfindung die Aufgabe zugrunde, ein Verfahren zu schaffen, das einerseits die aufwendigen Spannvorrichtungen beim Verschweißen der Blechtafeln oder Formzuschnitte überflüssig macht und damit die Schweißvorrichtung wesentlich vereinfacht, andererseits das Anbringen von Heftpunkten mit ausreichender Festigkeit an den zu verschweißenden Blechkanten mit einem so geringen Wärmeeinbringen gestattet, daß ein thermischer Verzug vollständig vermieden wird.

Nach der Erfindung wird die Aufgabe durch die im kennzeichnenden Teil des Anspruches 1 angegebenen Merkmale gelöst.

Durch diese die Wärmeeinflußzone energetisch wenig beaufschlagenden Heftpunkte sind die beiden zu verschweißenden Blechkanten unverrückbar positioniert und können auch durch Schweißspannungen nicht gegeneinander verschoben werden. Die beim punktförmigen Heften der Blechkanten auftretenden Schweißkräfte sind vernachlässigbar gering, so daß die Vorrichtung zum Positionieren der Blechkanten für den Heftvorgang entsprechend leicht ausgelegt werden kann.

Die Heftpunkte können vorteilhaft mit einem Gaslaser oder mit einem Festkörperlaser hergestellt werden.

Weitere Ausführungsformen des erfindungsgemäßen Verfahrens sind in den Ansprüchen 2 bis 4 angegeben.

Nachstehend wird die Erfindung anhand von Ausführungsbeispielen näher erläutert:

### Beispiel 1

Zwei Blechzuschnitte von 1 x 100 x 300 mm und 2 x 100 x 300 mm werden an den Längskanten stumpf gegeneinander positioniert.

Mit einem 400 Watt Festkörperlaser werden unter folgenden Bedingungen die Kanten geheftet:

| **Leistung** | **Pulsdauer** | **Vorschub** | **Punktabstand** |
|---|---|---|---|
| **35 %** | **10 ms** | **10 m/min** | **7 mm** |

Die geheftete Naht kann ohne Spannvorrichtung anschliessend mit einem Laser verschweißt werden, ohne daß eine Dejustierung der gehefteten Kanten auftritt.

### Beispiel 2

Zwei Blechzuschnitte von 1 x 100 x 300 mm und 2 x 100 x 300 mm werden an den Längskanten stumpf gegeneinander positioniert und mit einem 400 Watt Festkörperlaser unter folgenden Bedingungen geheftet:

| **Leistung** | **Pulsdauer** | **Vorschub** | **Punktabstand** |
|---|---|---|---|
| **70 %** | **5 ms** | **20 m/min** | **15 mm** |

Die geheftete Naht kann ohne Spannvorrichtung anschließend mit einem Laser verschweißt werden, ohne daß eine Dejustierung der gehefteten Kanten auftritt.

Diese Verfahrensweise bietet technische und wirtschaftliche Vorteile, da beim Heften der zu verschweißenden Blechkanten die Positioniervorrichtung keine Schweißkräfte aufzunehmen braucht und daher sehr einfach und leicht ausgelegt werden kann.

Weiterhin kann die beim anschließenden Schweißen erforderliche Spannvorrichtung ganz entfallen.

Das Schweißen der stumpf gegeneinander positionierten Blechkanten kann sowohl mit einem Laser- wie auch mit einem Elektronenstrahl erfolgen.

Überlappt man die Blechkanten und heftet die Überlappung, so ist auch ein anschließendes Rollnahtschweißen oder ein Quetschnahtschweißen der gehefteten Rohplatine ohne aufwendige Spannvorrichtung möglich.

## Patentansprüche

1. Verfahren zum Herstellen geschweißter Stahlblechplatinen aus Blechtafeln oder Formzuschnitten, dadurch gekennzeichnet, daß die miteinander zu verschweißenden Blechkanten in der für das Verschweißen erforderlichen Weise zueinander positioniert und mittels eines Lasers durch punktförmige Schweißungen, die über die Nahtlänge angeordnet sind, geheftet und anschließend verschweißt werden.

2. Verfahren nach Anspruch 1, dadurch gekennzeichnet, daß stumpf gegeneinander geheftete Blechkanten anschließend mit einem Laserstrahl verschweißt werden.

3. Verfahren nach Anspruch 1, dadurch gekennzeichnet, daß stumpf gegeneinander geheftete Blechkanten anschließend mit einem Elektronenstrahl verschweißt werden.

4. Verfahren nach Anspruch 1, dadurch gekennzeichnet, daß überlappt geheftete Blechkanten anschließend durch Rollnahtverschweißen oder Quetschnahtschweißen miteinander verbunden werden.

## Claims

1. A process for the production of welded steel sheet plates from sheet panels or shaped blanks, characterised in that the sheet edges to be welded to one another are positioned in relation to one another in the manner required for welding and are tacked using a laser by spot welds which are disposed over the seam length, whereafter the sheet edges are welded.

2. A process according to claim one, characterised in that sheet edges tacked abutting one another are then welded with a laser beam.

3. A process according to claim one, characterised in that sheet edges tacked abutting one another are then welded with an electron beam.

4. A process according to claim one, characterised in that sheet edges tacked overlapping are then connected to one another by seam welding or pinch welding.

## Revendications

1. Procédé pour la fabrication de platines de tôles d'acier constituées de feuilles de tôles ou de pièces découpées profilées, caractérisé en ce que les bords des tôles à souder ensemble sont positionnés l'un par rapport à l'autre de la manière nécessaire pour le soudage, puis sont attachés et soudés immédiatement après au moyen d'un laser par des soudures en points, qui sont disposées sur la longueur de soudage.

2. Procédé selon la revendication 1, caractérisé en ce que les bords des tôles attachés bout à bout les uns contre les autres sont soudés immédiatement après par un rayon laser.

3. Procédé selon la revendication 1, caractérisé en ce que les bords des tôles attachés bout à bout les uns contre les autres sont soudés immédiatement après par un faisceau électronique.

4. Procédé selon la revendication 1, caractérisé en ce que les bords des tôles attachés avec recouvrement sont reliés les uns aux autres immédiatement après par soudage à la molette ou soudage en ligne continu par écrasement.
